(19) Europäisches Patentamt
European Patent Office
Office européen des brevets

(11) **EP 3 961 282 A1**

(12) **EUROPEAN PATENT APPLICATION**
published in accordance with Art. 153(4) EPC

(43) Date of publication:
**02.03.2022 Bulletin 2022/09**

(21) Application number: **20831258.7**

(22) Date of filing: **28.06.2020**

(51) International Patent Classification (IPC):
**G02B 13/00** (2006.01)

(52) Cooperative Patent Classification (CPC):
**G02B 1/00; G02B 9/62; G02B 13/00; G02B 13/02; G02B 13/18**

(86) International application number:
**PCT/CN2020/098602**

(87) International publication number:
**WO 2020/259697 (30.12.2020 Gazette 2020/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.06.2019 CN 201910572891**
**27.09.2019 CN 201910930246**

(71) Applicant: **Huawei Technologies Co., Ltd.**
**Shenzhen, Guangdong 518129 (CN)**

(72) Inventors:
• **YE, Haishui**
**Shenzhen, Guangdong 518129 (CN)**
• **GE, Hong**
**Shenzhen, Guangdong 518129 (CN)**
• **CHIANG, Yita**
**Shenzhen, Guangdong 518129 (CN)**
• **LU, Jianlong**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **OPTICAL LENS UNIT, CAMERA, AND TERMINAL DEVICE**

(57)    An optical lens unit (10), a camera, and a terminal device (100) are disclosed. The optical lens unit (10) includes a plurality of lenses (L1, L2, L3, L4, L5, and L6) sequentially arranged in an optical axis direction from an object side to an image side, where a material of at least one lens is a first material, and a relative refractive index temperature drift coefficient of the first material is less than a relative refractive index temperature drift coefficient of a plastic material. Among the plurality of lenses (L1, L2, L3, L4, L5, and L6), the first three lenses (L1, L2, and L3) in the direction from the object side to the image side are sequentially a first lens (L1), a second lens (L2), and a third lens (L3). The first lens (L1) has a positive focal power, the second lens (L2) has a positive focal power, and the third lens (L3) has a negative focal power. An effective focal length of the optical lens unit (10) is f. A distance that is on an optical axis and that is between an object-side surface (S1) of the first lens (L1) and an imaging surface (S15) is TTL, and TTL/f≤1. A temperature drift effect problem is resolved by limiting a material of a lens and the focal powers of the first three lenses (L1, L2, and L3) and in combination with a focal power of another lens, thereby improving an imaging effect.

FIG. 2a

**Description**

This application claims priority to Chinese Patent Application No. 201910572891.0, filed with the China National Intellectual Property Administration on June 27, 2019 and entitled "TELEPHOTO LENS UNIT OF PHOTOGRAPHIC OPTICAL SYSTEM, IMAGE CAPTURING APPARATUS, AND PORTABLE TERMINAL DEVICE ", and priority to Chinese Patent Application No. 201910930246.1, filed with the China National Intellectual Property Administration on September 27, 2019 and entitled "OPTICAL LENS UNIT, CAMERA, AND TERMINAL DEVICE", which are incorporated herein by reference in their entireties.

**TECHNICAL FIELD**

The present invention belongs to the field of optical imaging technologies, and in particular, to a telephoto lens unit of a photographic optical system and a terminal device.

**BACKGROUND**

Portable terminal devices are increasingly widely used, and cameras are typical terminal device components. With the continuous development of portable devices such as mobile phones, camera applications are increasingly diversified. In a multi-camera combined zoom system, a telephoto lens unit has become a development trend of a camera of a terminal device.

Generally, a telephoto photographing lens unit of a terminal device uses a structure design with 4 to 6 plastic lenses. An effective focal length and a flange focal length of an optical lens unit change with a temperature, which is referred to as a temperature drift effect. As the effective focal length of the optical lens unit increases, the temperature drift effect of the lens unit becomes more obvious. The temperature drift effect problem severely affects user experience.

How to resolve the temperature drift effect of the telephoto lens unit is a research and development direction in the industry.

**SUMMARY**

This application provides an optical lens unit, a camera, and a terminal device, where the optical lens unit is a telephoto lens, to resolve a temperature drift effect problem by limiting a material of a lens and focal powers of the first three lenses near an object side and in combination with a focal power of another lens, thereby improving an imaging effect and providing good user experience.

According to a first aspect, an embodiment of the present invention provides an optical lens unit, including a plurality of lenses sequentially arranged in an optical axis direction from an object side to an image side. A quantity of lenses may be four, five, six, seven, or the like. A material of at least one of the plurality of lenses is a first material, a relative refractive index temperature drift coefficient of the first material is less than a relative refractive index temperature drift coefficient of a plastic material, the first material may be a glass material, and materials of other lenses are plastic. Among the plurality of lenses, the first three lenses in the direction from the object side to the image side are sequentially a first lens, a second lens, and a third lens. The first lens has a positive focal power, the second lens has a positive focal power, and the third lens has a negative focal power. An effective focal length of the optical lens unit is f. A distance that is on an optical axis and that is between an object-side surface of the first lens and an imaging surface is TTL, and TTL/f≤1. The distance TTL that is on the optical axis and that is between the object-side surface of the first lens and the imaging surface specifically refers to a distance between an intersection point of the object-side surface of the first lens and the optical axis and an intersection point of the imaging surface and the optical axis. Specifically, parts of the object side of the first lens are all convex near the optical axis, to obtain a good field of view of the optical lens unit. In this application, the material of at least one lens is limited to the first material whose relative refractive index temperature drift coefficient is less than the relative refractive index temperature drift coefficient of the plastic material, and focal powers of the first lens, the second lens, the third lens, and another lens are further limited, so that a temperature drift effect of the optical lens unit can be suppressed and a comprehensive color aberration problem can be resolved. In this way, an imaging effect of the optical lens unit can be ensured even in a high temperature environment, and a shorter total length of the optical lens unit can be obtained.

In a possible implementation, the relative refractive index temperature drift coefficient of the first material is β (which represents a coefficient by which a refractive index changes in a medium, such as air, with a temperature of a material), and $-9 \times 10^{-5} \leq \beta \leq 9 \times 10^{-5}$. In this implementation, through a range limitation on the relative refractive index temperature drift coefficient of the first material and focal power allocation, a relatively small system temperature drift coefficient can be obtained for the optical lens unit. Specifically, the relative refractive index temperature drift coefficient of the first material is β, and $-9 \times 10^{-5} \leq \beta \leq 0$. In other words, the relative refractive index temperature drift coefficient of the first material is selected as a negative value, and may be an opposite number of the relative refractive index temperature drift coefficient of the plastic material. For example, the first material is a glass material. A relative refractive index temperature drift coefficient of a lens made of the plastic material is a positive value. By setting the relative refractive index temperature drift coefficient to a negative value, a part of the relative refractive index temperature drift coefficient of the lens made of the plastic material can be offset, so that from an overall effect, a relatively small system temperature drift coefficient can be obtained for the optical lens unit.

In a possible implementation, a temperature drift coefficient of the optical lens unit is $\Delta f/\Delta°C$, and -2.6 $\mu m/°C \leq \Delta f/\Delta°C \leq 2.6 \mu m/°C$, to facilitate suppression of the temperature drift effect of the optical lens unit. In this implementation, a range of the temperature drift coefficient is limited, to ensure that the optical lens unit meets a use requirement. To further optimize a design architecture of the optical lens unit, the range of the temperature drift coefficient may be specifically -1 $\mu m/°C \leq \Delta f/\Delta°C \leq 1 \mu m/°C$. A smaller absolute value of the temperature drift coefficient $\Delta f/\Delta°C$ of the optical lens unit indicates a better imaging effect.

In a possible implementation, a curvature radius of an object-side surface of the second lens is R21, a curvature radius of an image-side surface of the second lens is R22, and the two parameters meet a condition of $|f/R21|+|f/R22|<8$, to help correct a comprehensive aberration of the optical lens unit. When $|f/R21|+|f/R22|$ is greater than or equal to 10, it is unhelpful to correct the comprehensive aberration of the optical lens unit, and an imaging effect is affected.

In a possible implementation, thicknesses are allocated based on density of a lens material, so that a weight is even in the front and rear of a telephoto lens unit, and a position of a center of gravity is located near a center of the optical lens unit, thereby ensuring a stable posture of the optical lens unit. The center of gravity of the optical lens unit is located at a central position of the optical lens unit, and the central position of the optical lens unit refers to a position of a middle point between an intersection point of an object side of the first lens and the optical axis and an intersection point of an image side of a last lens and the optical axis. In this application, the central position is not limited to a midpoint position, and may fall within a range near the midpoint position, provided that when all lenses are assembled in a lens barrel of a camera, a weight is even in the front and rear of the camera. In this application, a material of at least one of the plurality of lenses is the first material, for example, glass, and materials of the other lenses are plastic materials, so that the lens made of the first material is heavier than the other lenses, and consequently deviation of a center of gravity is prone to occur. As a result, in a process of using the camera, because of the deviation of the center of gravity, it is difficult to implement anti-shake when a voice coil motor drives the camera to implement anti-shake. However, in this application, the position of the center of gravity is limited, so that the posture of the optical lens unit is stable. In this way, an anti-shake problem of the camera is more easily resolved in a use process.

In a possible implementation, there are six lenses, which are respectively the first lens, the second lens, the third lens, a fourth lens, a fifth lens, and a sixth lens that are sequentially arranged in the direction from the object side to the image side. The optical lens unit further includes a vignetting stop, and the vignetting stop is disposed on an object side of the first lens and/or disposed on an image side of the sixth lens. The vignetting stop can intercept imaging light with a large aberration (also referred to as interception of an off-axis beam), to improve imaging quality, and help decrease an outer diameter of the optical lens unit.

In a possible implementation, a dispersion coefficient (Abbe number) of the lens having the first material is V, and V meets a condition of $15 \leq V \leq 100$. In this implementation, a color aberration of the optical lens unit can be corrected through appropriate focal power allocation and dispersion coefficient selection, to obtain an imaging effect with better definition. The dispersion coefficient is an important indicator to measure imaging definition of the lens, and is usually represented by an Abbe number (dispersion coefficient). A larger Abbe number indicates lower dispersion. On the contrary, a smaller Abbe number indicates higher dispersion and worse imaging definition. In other words, the Abbe number represents a separation effect of a material on a light source (optical spectral lines). After a beam of parallel white light passes through an ideal lens, the light focuses on one point. However, because the material shows different refractive indices for different optical wavelengths, the material generates the separation effect on the light, to enable the light to focus on a plurality of points (forming a "rainbow" phenomenon). Generally, there is such a rule: A larger refractive index of a material indicates higher dispersion, that is, a smaller Abbe number.

In a possible implementation, a material of the first lens is the first material, and at least one surface of the first lens is a spherical surface. A spherical radius of the spherical surface of the first lens is R, and -100 mm<R< 100 mm. In this implementation, the material of the first lens is the first material, and a glass material is used as an example. The first lens is more difficult to manufactured and molded than the lens made of the plastic material, and the spherical radius is excessively large. As a result, it is difficult to ensure a surface shape of the lens. In this application, the spherical radius is limited between positive 100 mm and negative 100 mm, to help reduce molding difficulty of the first lens (the material is the first material and may be the glass material), and ensure manufacturability of a glass lens.

In a possible implementation, a focal length of the first lens is f1, and f1 meets a condition of $0 \leq f1/f \leq 3$. The lens of the first material occupies a main focal power in the optical lens unit provided in this application, and has the greatest impact on optical performance. Therefore, in this implementation, optical performance of the optical lens unit is adjusted by limiting a range of a ratio of the focal length of the first lens to the effective focal length of the optical lens unit.

In a possible implementation, a spacing between the second lens and the third lens is SP2, a spacing between an object-side vertex position of the first lens and an image-side vertex position of the sixth lens is LT, and SP2/LT≤0.2. In this implementation, the spacing between the second lens and the third lens is limited, to facilitate stability of a process of the optical lens unit. Specifically, if a spacing between lenses is large, assembly precision is not easily ensured, and assembly difficulty is relatively large, which affects a yield of the optical lens unit. In this implementation, it is ensured that a ratio of the spacing to LT is less than 0.2, so that the spacing falls within an appropriate range, thereby reducing assembly difficulty and improving the yield.

In a possible implementation, a material of the second lens is the first material, and at least one surface of the second lens is a spherical surface. A spherical radius of the spherical surface of the second lens is R, and -100 mm<R<100 mm. This implementation helps reduce molding difficulty of the second lens (the material is the first material and may be a glass material), and ensures manufacturability of a glass lens.

In a possible implementation, a focal length of the second lens is f2, and 0≤f2/f≤3. The lens of the first material occupies a main focal power in the optical lens unit provided in this application, and has the greatest impact on optical performance. Therefore, in this implementation, optical performance of the optical lens unit is adjusted by limiting a range of a ratio of the focal length of the second lens to the effective focal length of the optical lens unit.

In a possible implementation, there are six lenses, which are respectively the first lens, the second lens, the third lens, a fourth lens, a fifth lens, and a sixth lens that are sequentially arranged in the direction from the object side to the image side. A spacing between the fourth lens and the fifth lens is SP4, a spacing between an object-side vertex position of the first lens and an image-side vertex position of the sixth lens is LT, and SP4/LT≤0.2, which helps reduce lens assembly difficulty. In this implementation, the spacing between the fourth lens and the fifth lens is limited, to achieve better assembly processability.

In a possible implementation, there are six lenses, which are respectively the first lens, the second lens, the third lens, a fourth lens, a fifth lens, and a sixth lens that are sequentially arranged in the direction from the object side to the image side. A material of the sixth lens is the first material, and at least one surface of the sixth lens is a spherical surface.

In a possible implementation, a focal length of the sixth lens is f6, and 0≤f6/f≤3.

In a possible implementation, a spacing between the third lens and the fourth lens is SP3, a spacing between an object-side vertex position of the first lens and an image-side vertex position of the sixth lens is LT, and SP3/LT≤0.2. In this implementation, the spacing between the third lens and the fourth lens is limited, to achieve better assembly processability.

In a possible implementation, the object-side surface of the first lens is convex near the optical axis, to improve an object-side light convergence capability.

According to a second aspect, an embodiment of the present invention provides a camera, including a lens barrel and the optical lens unit according to any one of the foregoing implementations. The optical lens unit is installed in the lens barrel.

According to a third aspect, this application provides a terminal device, including the camera.

In this application, a material of at least one lens in the optical lens unit is selected as the first material whose relative refractive index temperature drift coefficient is less than the relative refractive index temperature drift coefficient of the plastic material, so that an optical effect of the optical lens unit can be suppressed. In this way, parameters such as a focal length and an MTF (Modulation Transfer Function (modulation transfer function)) of the optical lens unit are insensitive to a temperature. This helps reduce a travel allowance used by a voice coil motor to compensate for the temperature drift effect of the lens unit or cancel a temperature drift effect compensation algorithm of a photographing system, thereby improving user experience, and obtaining excellent optical quality.

## BRIEF DESCRIPTION OF DRAWINGS

To describe the technical solutions in the embodiments or in the background of the present invention more clearly, the following describes the accompanying drawings required for describing the embodiments or the background of the present invention.

FIG. 1 is a schematic diagram in which an optical lens unit provided in this application is applied to a terminal device;
FIG. 2a is a schematic diagram of an optical lens unit according to Embodiment 1 of this application;
FIG. 2b is an axial spherical aberration curve of an optical system of Embodiment 1;
FIG. 2c is an astigmatism curve of the optical system of Embodiment 1;
FIG. 2d is a distortion curve of the optical system of Embodiment 1;
FIG. 2e is a lateral color aberration curve of the optical system of Embodiment 1;
FIG. 3a is a schematic diagram of an optical lens unit according to Embodiment 2 of this application;
FIG. 3b is an axial spherical aberration curve of an optical system of Embodiment 2;

FIG. 3c is an astigmatism curve of the optical system of Embodiment 2;
FIG. 3d is a distortion curve of the optical system of Embodiment 2;
FIG. 3e is a lateral color aberration curve of the optical system of Embodiment 2;
FIG. 4a is a schematic diagram of an optical lens unit according to Embodiment 3 of this application;
FIG. 4b is an axial spherical aberration curve of an optical system of Embodiment 3;
FIG. 4c is an astigmatism curve of the optical system of Embodiment 3;
FIG. 4d is a distortion curve of the optical system of Embodiment 3;
FIG. 4e is a lateral color aberration curve of the optical system of Embodiment 3;
FIG. 5a is a schematic diagram of an optical lens unit according to Embodiment 4 of this application;
FIG. 5b is an axial spherical aberration curve of an optical system of Embodiment 4;
FIG. 5c is an astigmatism curve of the optical system of Embodiment 4;
FIG. 5d is a distortion curve of the optical system of Embodiment 4;
FIG. 5e is a lateral color aberration curve of the optical system of Embodiment 4;
FIG. 6a is a schematic diagram of an optical lens unit according to Embodiment 5 of this application;
FIG. 6b is an axial spherical aberration curve of an optical system of Embodiment 5;
FIG. 6c is an astigmatism curve of the optical system of Embodiment 5;
FIG. 6d is a distortion curve of the optical system of Embodiment 5; and
FIG. 6e is a lateral color aberration curve of the optical system of Embodiment 5.

## DESCRIPTION OF EMBODIMENTS

The following describes the embodiments of the present invention with reference to the accompanying drawings in the embodiments of the present invention.

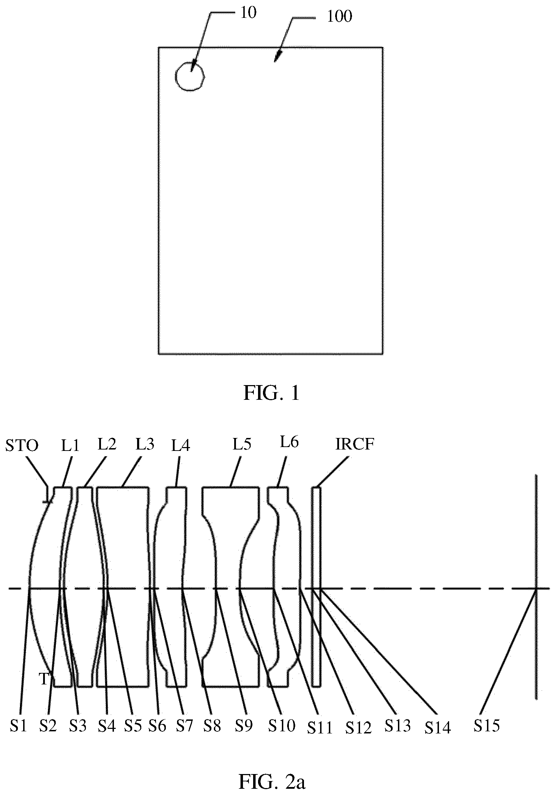

Referring to FIG. 1, an optical lens unit 10 in this application is applied to a camera in a terminal device 100. The terminal device 100 may be a portable terminal such as a mobile phone or a tablet. The optical lens unit 10 may be a telephoto lens unit, and the optical lens unit 10 is installed in a lens barrel of the camera. The camera is assembled inside the terminal device 100, and may be a rear-facing camera or a front-facing camera of the terminal device 100, or a telescopic camera that can extend out of a housing of the terminal device 100.

The optical lens unit provided in this application includes six lenses, and the six lenses are respectively a first lens, a second lens, a third lens, a fourth lens, a fifth lens, and a sixth lens that are sequentially distributed from an object side to an image side in an optical axis direction. A material of at least one of the six lenses is a first material, and a relative refractive index temperature drift coefficient of the first material is less than a relative refractive index temperature drift coefficient of a plastic material. For example, the first material may be a glass material, and a refractive index of the glass material is insensitive to a temperature drift coefficient. Specifically, the relative refractive index temperature drift coefficient of the glass material is a negative value, the relative refractive index temperature drift coefficient of the plastic material is a positive value, and the relative refractive index temperature drift coefficient of the glass material is the opposite number of the relative refractive index temperature drift coefficient of the plastic material. The first lens has a positive focal power, the second lens has a positive focal power, and the third lens has a negative focal power. An effective focal length of the optical lens unit is f. A distance that is on an optical axis and that is between an object-side surface of the first lens and an imaging surface is TTL, and TTL/f≤1. The first material is selected as a special material of at least one lens, and focal powers of the first three lenses are further allocated, so that a temperature effect of the optical lens unit can be improved, and parameters such as the effective focal length and an MTF of the optical lens unit are insensitive to temperature. This helps reduce a travel allowance used by a voice coil motor to compensate for a temperature drift effect of the lens unit or cancel a temperature drift effect compensation algorithm of the optical lens unit, thereby improving user experience.

Specifically, the glass material may be crown glass, flint glass, borosilicate glass, quartz glass, or the like.

Specifically, the first three lenses (namely, the first lens, the second lens, and the third lens described in this application) of the optical lens unit distributed from the object side to the image side are allocated with a main focal power of the optical lens unit, and the first lens has the positive focal power, the second lens has the positive focal power, and the third lens has the negative focal power, so that a color aberration of the optical lens unit can be better corrected, thereby improving imaging quality.

In this embodiment of this application, for the first lens, an object-side surface of the first lens is convex near the optical axis, an image-side surface of the first lens is concave near the optical axis, and both are spherical surfaces. For the second lens, an object-side surface of the second lens is convex near the optical axis, an image-side surface of the second lens is convex near the optical axis, and both are aspherical surfaces. For the third lens, an object-side surface of the third lens is concave near the optical axis, an image-side surface of the third lens is convex near the optical axis, and both are aspherical surfaces.

The object-side surface of the first lens is convex near the optical axis, to improve an object-side light convergence capability.

An aspherical curve equation of the lens is defined as follows:

$$z = \frac{cr^2}{1 + \sqrt{1 - (1+k)c^2r^2}} + \sum_{i=1}^{N} \alpha_i \rho^{2i},$$

, where

Z is a vertical distance between a point, on an aspherical surface, whose distance to the optical axis is r and a tangent plane tangent to an intersection point on the optical axis of the aspherical surface;

r is a vertical distance between a point on an aspherical curve and the optical axis; and

C is a curvature, k is a conic coefficient, and $\alpha_i$ is an $i^{th}$ order aspherical coefficient.

A spacing between adjacent lenses refers to a distance between adjacent optical surfaces in the optical axis direction.

The following describes this application in detail by using five specific embodiments.

**Embodiment 1**

As shown in FIG. 2a, a dotted line in the middle represents an optical axis, a left side of an optical lens unit is an object side, and a right side is an image side. In the optical lens unit provided in this embodiment, an aperture stop STO, a first lens L1, a second lens L2, a third lens L3, a fourth lens L4, a fifth lens L5, and a sixth lens L6 are sequentially arranged on the optical axis from the object side to the image side. An infrared filter element IRCF and an electronic photosensitive element may be placed on an image surface S15, and the aperture stop is placed in front of the first lens L1, so that a field of view can be expanded, which helps decrease an outer diameter of the optical lens unit.

The first lens L1 has a positive focal power and is made of a glass material. An object-side surface S1 of the first lens L1 is convex near the optical axis, an image-side surface S2 of the first lens L1 is concave near the optical axis, and both are spherical surfaces.

The second lens L2 has a positive focal power and is made of a resin material (the resin material is also referred to as a plastic material, and the following description has the same explanation). An object-side surface S3 of the second lens L2 is convex near the optical axis, an image-side surface S4 of the second lens L2 is convex near the optical axis, and both are aspherical surfaces.

The third lens L3 has a negative focal power and is made of a resin material. An object-side surface S5 of the third lens L3 is concave near the optical axis, an image-side surface S6 of the third lens L3 is convex near the optical axis, and both are aspherical surfaces.

The fourth lens L4 has a negative focal power and is made of a resin material. An object-side surface S7 of the fourth lens L4 is convex near the optical axis, an image-side surface S8 of the fourth lens L4 is concave near the optical axis, and both are aspherical surfaces.

The fifth lens L5 has a negative focal power and is made of a resin material. An object-side surface S9 of the fifth lens L5 is concave near the optical axis, an image-side surface S10 of the fifth lens L5 is concave near the optical axis, and both are aspherical surfaces.

The sixth lens L6 has a negative focal power and is made of a resin material. An object-side surface S11 of the sixth lens L6 is convex near the optical axis, an image-side surface S12 of the sixth lens L6 is convex near the optical axis, and both are aspherical surfaces.

An object-side surface S13 and an image-side surface S14 of the infrared filter element IRCF are both flat surfaces.

More generally, the resin material may be replaced with other transparent plastics. Usually, a relative refractive index temperature drift coefficient of the plastic is positive. The plastic refers to a material that uses polymer materials (or directly polymerized by monomers in a processing process) as main ingredients and uses a plasticizer, a filler, a lubricant, a colorant, and another additive as auxiliary ingredients, and that can be flow molded in a processing process. The resin material is a type of plastic.

A distance that is on the optical axis and that is between the object-side surface S1 of the first lens L1 and an imaging surface S15 corresponding to an infinite object distance is TTL, an effective focal length of the optical lens unit is f, and the two parameters can meet the following condition: TTL/f≤0.88, to implement a shorter TTL. This facilitates miniaturized design of the optical lens unit, saves an internal space of a terminal device, and facilitates a thinning development of the terminal device.

In Embodiment 1, a dispersion coefficient (Abbe number) of the first lens L1 is V1, and V1 meets $15 \leq V1 \leq 100$. A color aberration of the lens unit can be corrected through appropriate focal power allocation and dispersion coefficient selection. Specifically, the dispersion coefficient of the first lens L1 is greater than dispersion coefficients of the other five lenses, and the dispersion coefficient of the first lens L1 may be greater than 60.

In Embodiment 1, a changed amount of the effective focal length f of the optical lens unit is $\Delta f$ when a temperature changes by $\Delta °C$, and $\Delta f/\Delta °C$ is defined as a temperature drift coefficient of the optical lens unit. The temperature drift coefficient meets the following condition: $-1 \ \mu m/°C \leq \Delta f/\Delta °C \leq 1 \ \mu m/°C$, so that a temperature drift effect of a photographing system can be improved.

A relative refractive index temperature drift coefficient $\beta$ is defined as $(dn/dt)rel$ (n is a refractive index and T is a temperature), which represents a coefficient by which a refractive index changes in a medium, such as air, with a temperature of a material. A relative refractive index temperature drift coefficient $\beta 1$ of the first lens L1 in Embodiment 1 meets: $-9 \times 10^{-5} \leq \beta 1 \leq 9 \times 10^{-5}$. A focal length of the first lens L1 is f1, the effective focal length of the optical lens unit is f, and f1/f=1.13 meets a condition of $0 \leq f1/f \leq 3$. Therefore, a material with a low refractive index temperature drift coefficient and focal power allocation can be used to obtain a relatively small temperature drift coefficient of the optical lens unit.

In Embodiment 1, a spacing between the second lens L2 and the third lens L3 is SP2, a spacing between an object-side vertex position of the first lens L1 and an image-side vertex position of the sixth lens L6 is LT, and $SP2/LT \leq 0.2$, which helps reduce implementation difficulty of assembly of the lens. Specifically, if a spacing between the lenses is large, assembly precision is not easily ensured, and assembly difficulty is relatively large, which affects a yield of the optical lens unit. In this implementation, it is ensured that a ratio of the spacing SP2 between the second lens L2 and the third lens L3 to LT is less than or equal to 0.2, so that the spacing between the second lens L2 and the third lens L3 falls within an appropriate range, thereby reducing assembly difficulty and improving the yield.

The object-side vertex of the lens described in this application refers to a position of the object-side surface of the lens on the optical axis, and the image-side vertex position refers to a position of the image-side surface of the lens on the optical axis. The same explanation is also used in other embodiments.

As an extension of Embodiment 1, optionally, a vignetting stop ST1 (not shown in the figure) may be disposed in front (namely, an object side) of the first lens L1 and a vignetting stop ST2 (not shown in the figure) may be disposed in rear (namely, an image side) of the sixth lens L6, so that a diameter of the lens unit can be effectively decreased.

In Embodiment 1, the effective focal length of the optical lens unit is f. A curvature radius of the object-side surface S3 of the second lens L2 is R21, a curvature radius of the image-side surface S4 of the second lens L2 is R22, and the two parameters meet the following condition: $|f/R21|+|f/R22|=5.46$. This helps correct a comprehensive aberration of the lens unit, so that a lateral color aberration of the optical lens unit is less than 1.5 um, an axial color aberration is less than 10 um, and distortion is less than 1%.

Table 1a is a table of characteristics of an optical system of this embodiment, and a curvature radius and a thickness each are in unit of millimeter (mm).

**Table 1a**

| Surface number | Description | Surface type | Curvature radius | Thickness | Material | Refractive index | Dispersion coefficient |
|---|---|---|---|---|---|---|---|
| OBJ | | Flat surface | Unlimited | Unlimited | | | |
| STO | Aperture stop | Flat surface | Unlimited | -0.450 | | | |
| S1 | First lens | Standard surface | 4.647 | 0.759 | GLASS | 1.5891 | 61.248 |
| S2 | | Standard surface | 8.442 | 0.100 | | | |
| S3 | Second lens | Aspherical surface | 5.849 | 1.000 | PLASTIC | 1.5445 | 55.987 |
| S4 | | Aspherical surface | -4.829 | 0.096 | | | |
| S5 | Third lens | Aspherical surface | -4.929 | 1.052 | PLASTIC | 1.651 | 21.518 |

(continued)

| Surface number | Description | Surface type | Curvature radius | Thickness | Material | Refractive index | Dispersion coefficient |
|---|---|---|---|---|---|---|---|
| S6 | | Aspherical surface | -7.968 | 0.100 | | | |
| S7 | Fourth lens | Aspherical surface | -46.437 | 0.704 | PLASTIC | 1.5445 | 55.987 |
| S8 | | Aspherical surface | 4.301 | 0.846 | | | |
| S9 | Fifth lens | Aspherical surface | -45.309 | 0.597 | PLASTIC | 1.5445 | 55.987 |
| S10 | | Aspherical surface | 9.659 | 0.841 | | | |
| S11 | Sixth lens | Aspherical surface | -70.266 | 0.655 | PLASTIC | 1.5445 | 55.987 |
| S12 | | Aspherical surface | 629.919 | 0.300 | | | |
| S13 | Infrared cut-off filter | Flat surface | Unlimited | 0.210 | - | | |
| S14 | | Flat surface | Unlimited | 5.391 | | | |
| S15 | Image surface | Flat surface | Unlimited | | | | |

Table 1b shows high-order coefficients A4, A6, A8, and A10 that may be used for aspherical lens surfaces S1 to S12 in Embodiment 1.

**Table 1b**

| Surface number | K | A4 | A6 | A8 | A10 |
|---|---|---|---|---|---|
| S1 | 0 | 0 | 0 | 0 | 0 |
| S2 | 0 | 0 | 0 | 0 | 0 |
| S3 | 0 | -5.025E-003 | 1.821E-003 | -3.291E-004 | 1.825E-006 |
| 0 | 0 | 1.661E-002 | 7.360E-004 | -1.031E-003 | 1.241E-004 |
| S5 | 0 | 1.947E-002 | -2.592E-003 | -2.572E-004 | 8.490E-005 |
| S6 | 0 | 2.825E-002 | -7.906E-003 | 1.161E-003 | -4.123E-005 |
| S7 | 0 | 1.666E-002 | -2.492E-003 | 2.757E-004 | 8.607E-005 |
| S8 | 0 | -5.853E-002 | 9.528E-003 | -8.028E-005 | -4.063E-005 |
| S9 | 0 | -3.243E-003 | -2.411E-002 | 1.071E-002 | -1.765E-003 |
| S10 | 0 | 7.684E-002 | -1.068E-002 | -1.819E-003 | 3.163E-004 |
| S11 | 0 | 4.546E-002 | -1.006E-002 | 5.895E-004 | -2.122E-004 |
| S12 | 0 | 6.398E-003 | -2.340E-003 | -4.320E-004 | -3.831E-005 |

Table 1c shows the distance TTL that is on the optical axis and that is between the object-side surface S1 of the first lens L1 of the optical system of this embodiment and the imaging surface S15 corresponding to the infinite object distance, the maximum image height ImgH of the optical lens unit, the effective focal length f of the optical lens unit, the focal length f1 of the first lens, the focal length f2 of the second lens, the focal length f3 of the third lens, the focal length f4 of the fourth lens, the focal length f5 of the fifth lens, and the focal length f6 of the sixth lens.

**Table 1c**

| Parameter | TTL | ImgH | F | f1 | f2 | f3 | f4 | f5 | f6 |
|---|---|---|---|---|---|---|---|---|---|
| Value (mm) | 12.65 | 2.8 | 14.45 | 16.29 | 5.01 | -22.81 | -7.17 | -14.52 | -20.05 |

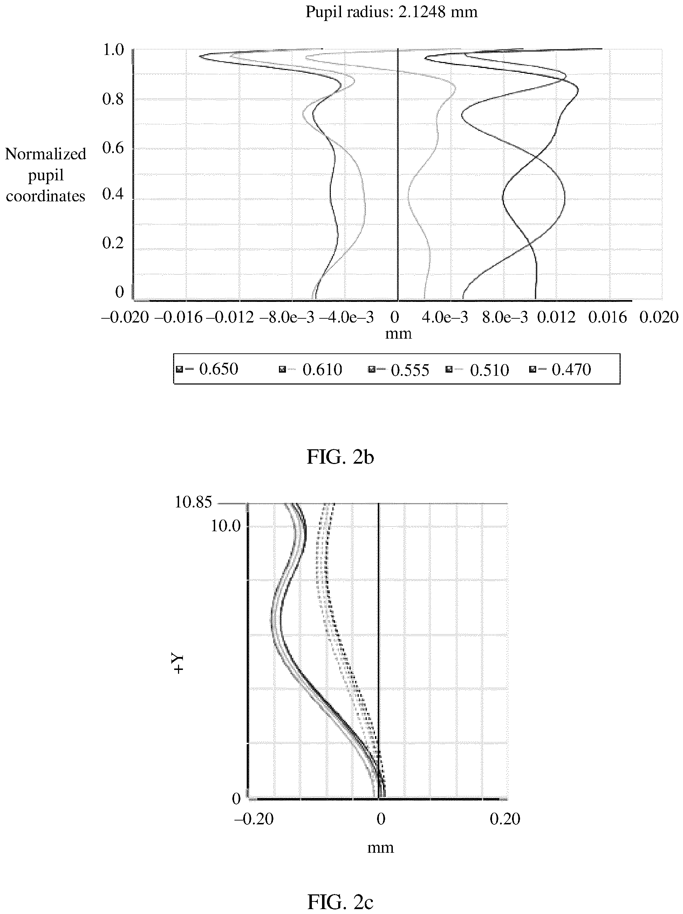

FIG. 2b shows an axial spherical aberration curve of the optical system of Embodiment 1. A horizontal axis is a focusing position on the optical axis, and a vertical axis is a field of view. The axial spherical aberration curve represents axial focusing positions that are of five pieces of light of different wavelengths and that are in different fields of view.

FIG. 2c shows an astigmatism curve of the optical system of Embodiment 1, and the astigmatism curve represents a tangential image surface curvature and a sagittal image surface curvature. A solid line with a larger curvature represents the tangential image surface curvature, and a dashed line with a smaller curvature represents the sagittal image surface curvature.

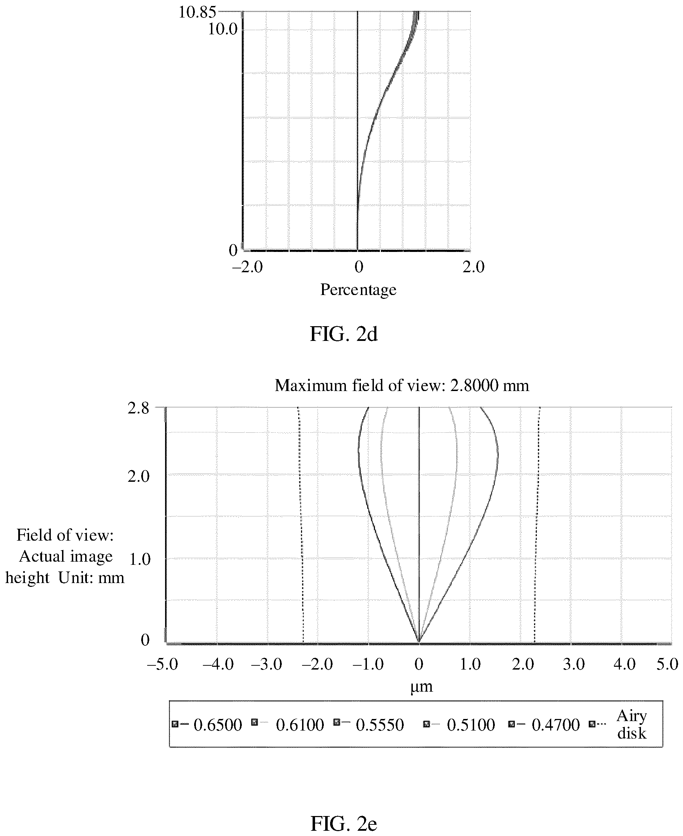

FIG. 2d shows a distortion curve of the optical system of Embodiment 1, and the distortion curve represents distortion values corresponding to different fields of view.

FIG. 2e shows a lateral color aberration curve of the optical system of Embodiment 1. A horizontal axis is an image height change, and a vertical axis is a field of view. The lateral color aberration curve represents lateral color aberrations that correspond to five pieces of light of different wavelengths and that are in different fields of view.

As can be learned from FIG. 2b to FIG. 2e, the optical system provided in Embodiment 1 can achieve good imaging quality.

**Embodiment 2**

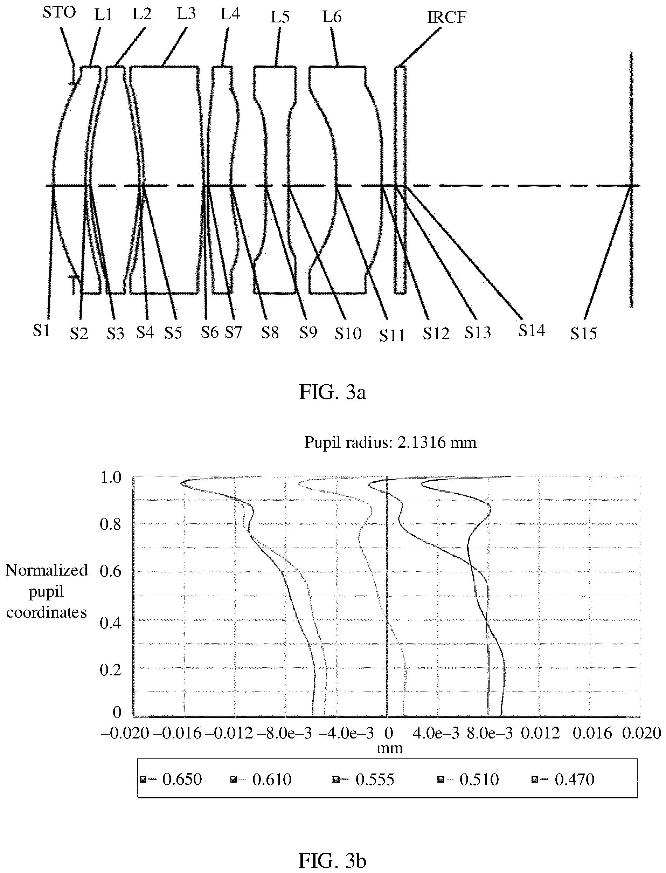

As shown in FIG. 3a, in an optical lens unit of this implementation, an aperture stop STO, a first lens L1, a second lens L2, a third lens L3, a fourth lens L4, a fifth lens L5, and a sixth lens L6 are sequentially arranged on an optical axis from an object side to an image side. An infrared filter element IRCF and an electronic photosensitive element may be placed on an image surface S15, and the aperture stop is placed in front of the first lens L1.

The first lens L1 has a positive focal power and is made of a glass material. An object-side surface S1 of the first lens L1 is convex near the optical axis, an image-side surface S2 of the first lens L1 is concave near the optical axis, and both are spherical surfaces.

The second lens L2 has a positive focal power and is made of a resin material. An object-side surface S3 of the second lens L2 is convex near the optical axis, an image-side surface S4 of the second lens L2 is convex near the optical axis, and both are aspherical surfaces.

The third lens L3 has a negative focal power and is made of a resin material. An object-side surface S5 of the third lens L3 is concave near the optical axis, an image-side surface S6 of the third lens L3 is convex near the optical axis, and both are aspherical surfaces.

The fourth lens L4 has a negative focal power and is made of a resin material. An object-side surface S7 of the fourth lens L4 is convex near the optical axis, an image-side surface S8 of the fourth lens L4 is concave near the optical axis, and both are aspherical surfaces.

The fifth lens L5 has a positive focal power and is made of a resin material. An object-side surface S9 of the fifth lens L5 is concave near the optical axis, an image-side surface S10 of the fifth lens L5 is concave near the optical axis, and both are aspherical surfaces.

The sixth lens L6 has a negative focal power and is made of a resin material. An object-side surface S11 of the sixth lens L6 is concave near the optical axis, an image-side surface S12 of the sixth lens L6 is convex near the optical axis, and both are aspherical surfaces.

A distance that is on the optical axis and that is between the object-side surface S1 of the first lens L1 and an imaging surface S15 corresponding to an infinite object distance is TTL, an effective focal length of the optical lens unit is f, and the two parameters can meet the following condition: TTL/f≤0.88, to implement a shorter TTL. This facilitates miniaturized design of the optical lens unit, saves an internal space of a terminal device, and facilitates thinning development of the terminal device.

A dispersion coefficient (Abbe number) of the first lens L1 is V1, and V1 meets 15≤V1≤100. A color aberration of the lens unit can be corrected through appropriate focal power allocation and dispersion coefficient selection.

In this implementation, a changed amount of the focal length f is $\Delta f$ when a temperature changes by $\Delta°C$, and $\Delta f/\Delta°C$ is defined as a temperature drift coefficient of the optical lens unit. The temperature drift coefficient meets the following condition: -1 $\mu m/°C \leq \Delta f/\Delta°C \leq 1$ $\mu m/°C$, so that a temperature drift effect of a photographing system can be improved.

A relative refractive index temperature drift coefficient $\beta$ is defined as (dn/dt)rel, which represents a coefficient by which a refractive index changes in a medium, such as air, with a temperature of a material. A relative refractive index temperature drift coefficient $\beta 1$ of the first lens L1 meets: $-9 \times 10^{-5} \leq \beta 1 \leq 9 \times 10^{-5}$. A focal length of the first lens is f1, the effective focal length of the optical lens unit is f, and f1/f=1.20 meets a condition of $0 \leq f1/f \leq 3$. Therefore, a material with a low refractive index temperature drift coefficient and focal power allocation can be used to obtain a relatively small system temperature drift coefficient.

A spacing between the second lens L2 and the third lens L3 is SP2, a spacing between an object-side vertex position of the first lens L1 and an image-side vertex position of the sixth lens L6 is LT, and SP2/LT≤0.2, which helps reduce implementation difficulty of assembly of the lens.

As an extension of Embodiment 2, optionally, a vignetting stop ST1 (not shown in the figure) may be disposed in front (namely, an object side) of the first lens L1 and a vignetting stop ST2 (not shown in the figure) may be disposed in rear (namely, an image side) of the sixth lens L6, so that a diameter of the lens unit can be effectively decreased.

In Embodiment 2, the effective focal length of the optical lens unit is f. A curvature radius of the object-side surface S3 of the second lens L2 is R21, a curvature radius of the image-side surface S4 of the second lens L2 is R22, and the two parameters meet the following condition: |f/R21|+|f/R22|=5.62. This helps correct a comprehensive aberration of the lens unit, so that a lateral color aberration of the optical lens unit is less than 1.5 um, an axial color aberration is less than 10 um, and distortion is less than 1%.

Table 2a is a table of characteristics of an optical system of this embodiment, and a curvature radius and a thickness each are in unit of millimeter (mm).

**Table 2a**

| Surface number | Description | Surface type | Curvature radius | Thickness | Material | Refractive index | Dispersion coefficient |
|---|---|---|---|---|---|---|---|
| OBJ | | Flat surface | Unlimited | Unlimited | | | |
| STO | Aperture stop | Flat surface | Unlimited | -0.450 | | | |
| S1 | First lens | Standard surface | 4.597 | 0.702 | GLASS | 1.5891 | 61.248 |
| S2 | | Standard surface | 7.840 | 0.100 | | | |
| S3 | Second lens | Aspherical surface | 5.647 | 1.082 | PLASTIC | 1.5445 | 55.987 |
| S4 | | Aspherical surface | -4.743 | 0.099 | | | |
| S5 | Third lens | Aspherical surface | -5.011 | 1.306 | PLASTIC | 1.651 | 21.518 |
| S6 | | Aspherical surface | -7.873 | 0.100 | | | |
| S7 | Fourth lens | Aspherical surface | -21.624 | 0.500 | PLASTIC | 1.5445 | 55.987 |
| S8 | | Aspherical surface | 3.944 | 0.759 | | | |
| S9 | Fifth lens | Aspherical surface | 41.025 | 0.500 | PLASTIC | 1.651 | 21.518 |
| S10 | | Aspherical surface | 71.669 | 1.045 | | | |
| S11 | Sixth lens | Aspherical surface | -10.037 | 1.001 | PLASTIC | 1.5445 | 55.987 |
| S12 | | Aspherical surface | 38.967 | 0.300 | | | |

(continued)

| Surface number | Description | Surface type | Curvature radius | Thickness | Material | Refractive index | Dispersion coefficient |
|---|---|---|---|---|---|---|---|
| S13 | Infrared cut-off filter | Flat surface | Unlimited | 0.210 | - | | |
| S14 | | Flat surface | Unlimited | 4.959 | | | |
| S15 | Image surface | Flat surface | Unlimited | | | | |

Table 2b shows high-order coefficients A4, A6, A8, and A10 that may be used for aspherical lens surfaces S1 to S12 in Embodiment 2.

**Table 2b**

| Surface number | K | A4 | A6 | A8 | A10 |
|---|---|---|---|---|---|
| S1 | 0 | 0 | 0 | 0 | 0 |
| S2 | 0 | 0 | 0 | 0 | 0 |
| S3 | -8.327E-011 | -4.631E-003 | -1.213E-004 | 5.574E-005 | 1.306E-006 |
| 0 | 6.265E-010 | 1.430E-002 | 8.159E-005 | -2.265E-004 | -1.306E-006 |
| S5 | 8.444E-010 | 1.861E-002 | -5.459E-004 | -3.463E-004 | -9.859E-006 |
| S6 | -4.701E-011 | 2.457E-002 | -1.191E-003 | -1.837E-003 | 2.819E-004 |
| S7 | -3.966E-010 | 3.028E-002 | -3.161E-003 | -1.455E-003 | 2.663E-004 |
| S8 | 8.226E-010 | -4.214E-003 | -1.506E-002 | 2.263E-003 | -8.148E-005 |
| S9 | 1.216E-009 | -2.580E-003 | -2.212E-002 | 8.916E-003 | -1.386E-003 |
| S10 | 4.980E-010 | -5.699E-003 | -6.727E-003 | 7.261E-003 | -8.237E-004 |
| S11 | -9.961E-010 | -5.486E-002 | 9.901E-003 | -1.447E-003 | 2.421E-004 |
| S12 | -6.946E-010 | -3.694E-002 | 6.961E-003 | -1.159E-003 | 8.268E-005 |

Table 2c shows the distance TTL that is on the optical axis and that is between the object-side surface S1 of the first lens L1 of the optical system of this embodiment and the imaging surface S15 corresponding to the infinite object distance, the maximum image height ImgH of the optical lens unit, the effective focal length f of the optical lens unit, the focal length f1 of the first lens, the focal length f2 of the second lens, the focal length f3 of the third lens, the focal length f4 of the fourth lens, the focal length f5 of the fifth lens, and the focal length f6 of the sixth lens.

**Table 2c**

| Parameter | TTL | ImgH | F | f1 | f2 | f3 | f4 | f5 | f6 |
|---|---|---|---|---|---|---|---|---|---|
| Value (mm) | 12.66 | 2.8 | 14.50 | 17.41 | 4.90 | -25.64 | -6.06 | 145.24 | -14.51 |

FIG. 3b shows an axial spherical aberration curve of the optical system of Embodiment 2. A horizontal axis is a focusing position on the optical axis, and a vertical axis is a field of view. The axial spherical aberration curve represents axial focusing positions that are of five pieces of light of different wavelengths and that are in different fields of view.

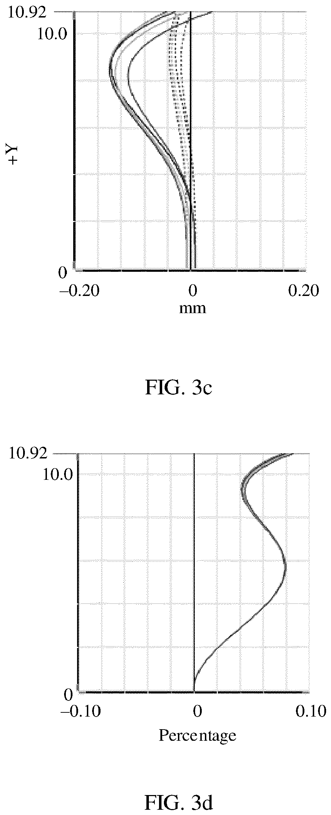

FIG. 3c shows an astigmatism curve of the optical system of Embodiment 2, and the astigmatism curve represents a tangential image surface curvature and a sagittal image surface curvature. A solid line with a larger curvature represents the tangential image surface curvature, and a dashed line with a smaller curvature represents the sagittal image surface curvature.

FIG. 3d shows a distortion curve of the optical system of Embodiment 2, and the distortion curve represents distortion values corresponding to different fields of view.

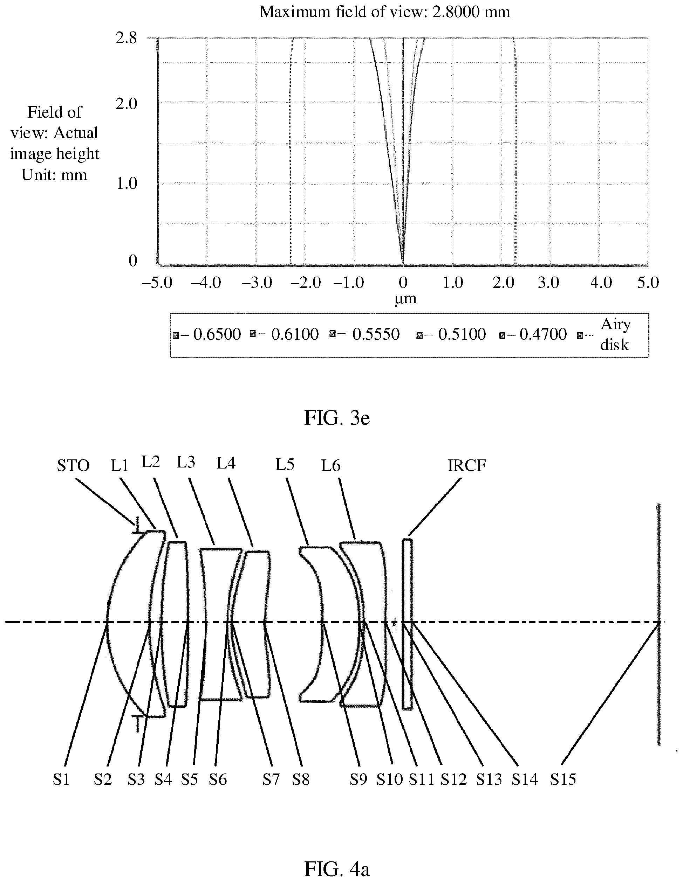

FIG. 3e shows a lateral color aberration curve of the optical system of Embodiment 2. A horizontal axis is an image height change, and a vertical axis is a field of view. The lateral color aberration curve represents lateral color aberrations that correspond to five pieces of light of different wavelengths and that are in different fields of view.

As can be learned from FIG. 3b to FIG. 3e, the optical system provided in Embodiment 2 can achieve good imaging quality.

**Embodiment 3**

As shown in FIG. 4a, in an optical lens unit of this implementation, an aperture stop STO, a first lens L1, a second lens L2, a third lens L3, a fourth lens L4, a fifth lens L5, and a sixth lens L6 are sequentially arranged on an optical axis from an object side to an image side. An infrared filter element IRCF and an electronic photosensitive element may be placed on an image surface S15, and the aperture stop is placed in front of the first lens L1.

The first lens L1 has a positive focal power and is made of a resin material. An object-side surface S1 of the first lens L1 is convex near the optical axis, an image-side surface S2 of the first lens L1 is concave near the optical axis, and both are aspherical surfaces.

The second lens L2 has a positive focal power and is made of a glass material. An object-side surface S3 of the second lens L2 is convex near the optical axis, an image-side surface S4 of the second lens L2 is convex near the optical axis, and both are spherical surfaces.

The third lens L3 has a negative focal power and is made of a resin material. An object-side surface S5 of the third lens L3 is concave near the optical axis, an image-side surface S6 of the third lens L3 is concave near the optical axis, and both are aspherical surfaces.

The fourth lens L4 has a positive focal power and is made of a resin material. An object-side surface S7 of the fourth lens L4 is convex near the optical axis, an image-side surface S8 of the fourth lens L4 is concave near the optical axis, and both are aspherical surfaces.

The fifth lens L5 has a positive focal power and is made of a resin material. An object-side surface S9 of the fifth lens L5 is concave near the optical axis, an image-side surface S10 of the fifth lens L5 is convex near the optical axis, and both are aspherical surfaces.

The sixth lens L6 has a negative focal power and is made of a resin material. An object-side surface S11 of the sixth lens L6 is concave near the optical axis, an image-side surface S12 of the sixth lens L6 is concave near the optical axis, and both are aspherical surfaces.

A distance that is on the optical axis and that is between the object-side surface S1 of the first lens L1 and an imaging surface S15 corresponding to an infinite object distance is TTL, an effective focal length of the optical lens unit is f, and the two parameters can meet the following condition: $TTL/f \leq 0.88$, to implement a shorter TTL.

In Embodiment 3, a dispersion coefficient (Abbe number) of the second lens L2 is V2, and V2 meets $15 \leq V2 \leq 100$. A color aberration of the lens unit can be corrected through appropriate focal power allocation and dispersion coefficient selection.

In Embodiment 3, a changed amount of the focal length f is $\Delta f$ when a temperature changes by $\Delta°C$, and $\Delta f/\Delta°C$ is defined as a temperature drift coefficient of the lens unit. The temperature drift coefficient meets the following condition: $-1\ \mu m/°C \leq \Delta f/\Delta°C \leq 1\ \mu m/°C$, so that a temperature drift effect of a photographing system can be improved.

A relative refractive index temperature drift coefficient $\beta$ is defined as (dn/dt)rel, which represents a coefficient by which a refractive index changes in a medium, such as air, with a temperature of a material. A relative refractive index temperature drift coefficient $\beta2$ of the second lens L2 in Embodiment 3 meets: $-9 \times 10^{-5} \leq \beta2 \leq 9 \times 10^{-5}$. A focal length of the second lens L2 is f2, the effective focal length of the optical lens unit is f, and f2/f=0.80 meets a condition of $0 \leq f2/f \leq 3$. Therefore, a material with a low refractive index temperature drift coefficient and appropriate focal power allocation are used to obtain a relatively small system temperature drift coefficient.

In Embodiment 3, a spacing between the fourth lens L4 and the fifth lens L5 is SP4, a spacing between an object-side vertex position of the first lens L1 and an image-side vertex position of the sixth lens L6 is LT, and $SP4/LT \leq 0.2$, which helps reduce implementation difficulty of assembly of the lens.

As an extension of Embodiment 3, optionally, a vignetting stop ST1 (not shown in the figure) may be disposed in front (namely, an object side) of the first lens L1 and a vignetting stop ST2 (not shown in the figure) may be disposed in rear (namely, an image side) of the sixth lens L6, so that a diameter of the lens unit can be effectively decreased.

In Embodiment 3, the effective focal length of the optical lens unit is f. A curvature radius of the object-side surface of the second lens L2 is R21, a curvature radius of the image-side surface of the second lens L2 is R22, and the two parameters meet the following condition: $|f/R21|+|f/R22|=1.75$. This helps correct a comprehensive aberration of the lens unit, so that a lateral color aberration of the optical lens unit is less than 1.5 um, an axial color aberration is less than 10 um, and distortion is less than 1%.

Table 3a is a table of characteristics of an optical system of this embodiment, and a curvature radius and a thickness each are in unit of millimeter (mm).

**Table 3a**

| Surface number | Description | Surface type | Curvature radius | Thickness | Material | Refractive index | Dispersion coefficient |
|---|---|---|---|---|---|---|---|
| OBJ | | Flat surface | Unlimited | Unlimited | | | |
| STO | Aperture stop | Flat surface | Unlimited | -0.700 | | | |
| S1 | First lens | Aspherical surface | 2.924 | 0.973 | PLASTIC | 1.5445 | 55.987 |
| S2 | | Aspherical surface | 5.371 | 0.282 | | | |
| S3 | Second lens | Standard surface | 10.995 | 0.614 | GLASS | 1.7174 | 29.51 |
| S4 | | Standard surface | -33.039 | 0.402 | | | |
| S5 | Third lens | Aspherical surface | -12.125 | 0.500 | PLASTIC | 1.651 | 21.518 |
| S6 | | Aspherical surface | 4.391 | 0.100 | | | |
| S7 | Fourth lens | Aspherical surface | 2.874 | 0.764 | PLASTIC | 1.5445 | 55.987 |
| S8 | | Aspherical surface | 4.390 | 1.323 | | | |
| S9 | Fifth lens | Aspherical surface | -15.245 | 0.852 | PLASTIC | 1.651 | 21.518 |
| S10 | | Aspherical surface | -4.976 | 0.100 | | | |
| S11 | Sixth lens | Aspherical surface | -6.174 | 0.500 | PLASTIC | 1.5445 | 55.987 |
| S12 | | Aspherical surface | 17.638 | 0.200 | | | |
| S13 | Infrared cut-off filter | Flat surface | Unlimited | 0.210 | - | | |
| S14 | | Flat surface | Unlimited | 5.697 | | | |
| S15 | Image surface | Flat surface | Unlimited | | | | |

Table 3b shows high-order coefficients A4 and A6 that may be used for aspherical lens surfaces S1 to S12 in Embodiment 3.

**Table 3b**

| Surface number | K | A4 | A6 |
|---|---|---|---|
| S1 | 6.239E-011 | -8.200E-004 | -8.098E-005 |
| S2 | 2.484E-010 | -2.464E-003 | 2.486E-004 |
| S3 | 0 | 0 | 0 |
| S4 | 0 | 0 | 0 |

(continued)

| Surface number | K | A4 | A6 |
|---|---|---|---|
| S5 | -1.397E-011 | -3.230E-004 | -1.742E-004 |
| S6 | -1.434E-010 | 4.746E-004 | -1.073E-003 |
| S7 | -2.483E-010 | -2.441E-002 | -4.289E-004 |
| S8 | -3.939E-010 | -3.674E-002 | 1.790E-003 |
| S9 | -3.902E-010 | -4.724E-002 | -4.978E-003 |
| S10 | -5.130E-010 | -3.972E-002 | 2.703E-003 |
| S11 | 2.552E-010 | -3.921E-002 | 4.105E-003 |
| S12 | -4.105E-010 | -2.281E-002 | 1.533E-003 |

Table 3c shows the distance TTL that is on the optical axis and that is between the object-side surface S1 of the first lens L1 of the optical system of this embodiment and the imaging surface S15 corresponding to the infinite object distance, the maximum image height ImgH of the optical lens unit, the effective focal length f of the optical lens unit, the focal length f1 of the first lens, the focal length f2 of the second lens, the focal length f3 of the third lens, the focal length f4 of the fourth lens, the focal length f5 of the fifth lens, and the focal length f6 of the sixth lens.

**Table 3c**

| Parameter | TTL | ImgH | F | f1 | f2 | f3 | f4 | f5 | f6 |
|---|---|---|---|---|---|---|---|---|---|
| Value (mm) | 12.7 | 2.8 | 14.45 | 10.30 | 11.50 | -4.85 | 12.93 | 10.90 | -8.31 |

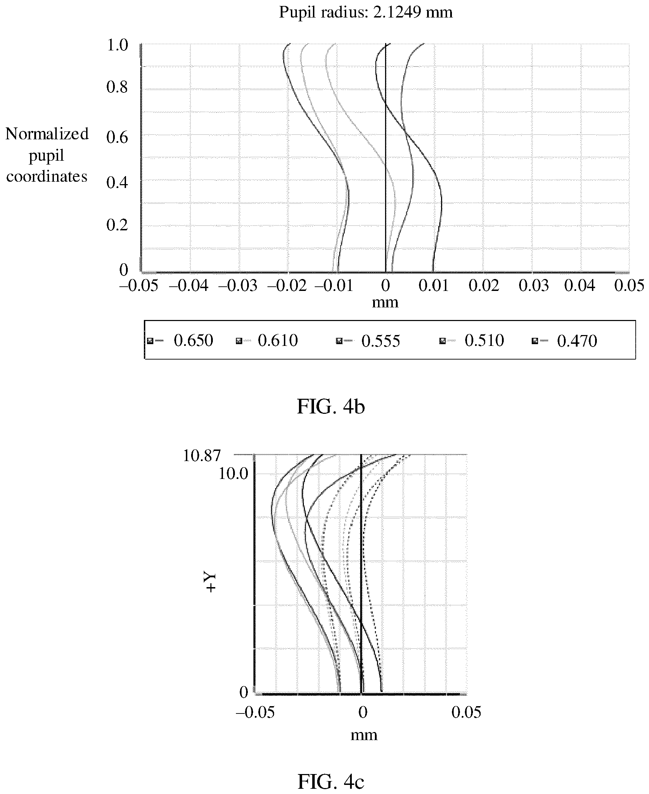

FIG. 4b shows an axial spherical aberration curve of the optical system of Embodiment 3. A horizontal axis is a focusing position on the optical axis, and a vertical axis is a field of view. The axial spherical aberration curve represents axial focusing positions that are of five pieces of light of different wavelengths and that are in different fields of view.

FIG. 4c shows an astigmatism curve of the optical system of Embodiment 3, and the astigmatism curve represents a tangential image surface curvature and a sagittal image surface curvature. A solid line with a larger curvature represents the tangential image surface curvature, and a dashed line with a smaller curvature represents the sagittal image surface curvature.

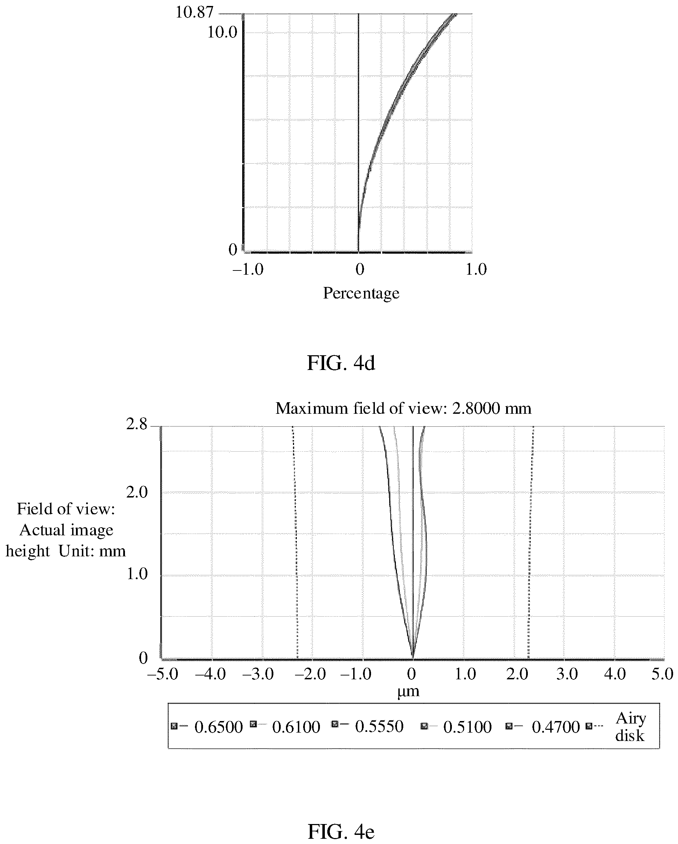

FIG. 4d shows a distortion curve of the optical system of Embodiment 3, and the distortion curve represents distortion values corresponding to different fields of view.

FIG. 4e shows a lateral color aberration curve of the optical system of Embodiment 3. A horizontal axis is an image height change, and a vertical axis is a field of view. The lateral color aberration curve represents lateral color aberrations that correspond to five pieces of light of different wavelengths and that are in different fields of view.

As can be learned from FIG. 4b to FIG. 4e, the optical system provided in Embodiment 3 can achieve good imaging quality.

**Embodiment 4**

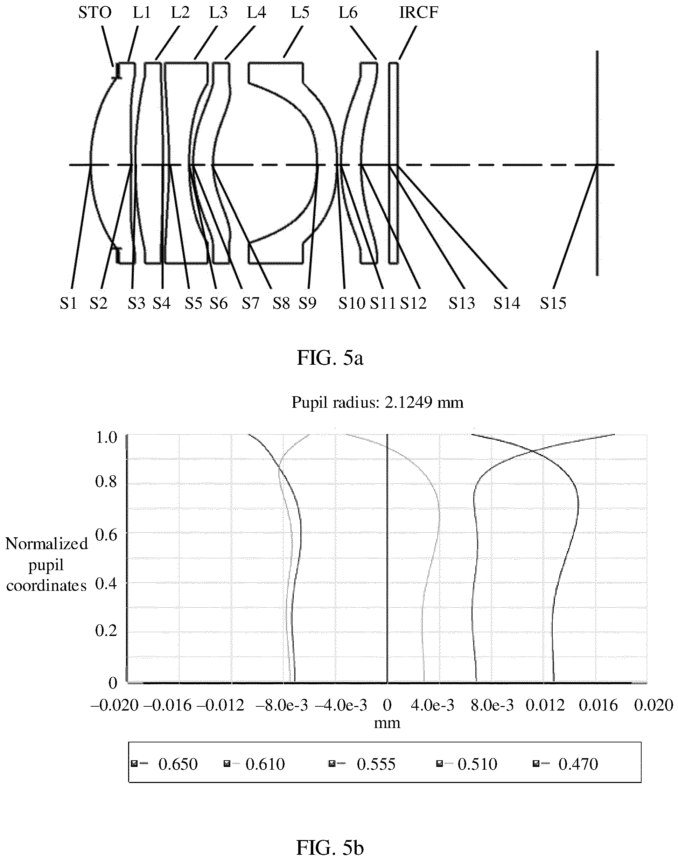

As shown in FIG. 5a, in an optical lens unit of this implementation, an aperture stop STO, a first lens L1, a second lens L2, a third lens L3, a fourth lens L4, a fifth lens L5, and a sixth lens L6 are sequentially arranged on an optical axis from an object side to an image side. An infrared filter element IRCF and an electronic photosensitive element may be placed on an image surface S15, and the aperture stop is placed in front of the first lens L1.

The first lens L1 has a positive focal power and is made of a resin material. An object-side surface S1 of the first lens L1 is convex near the optical axis, an image-side surface S2 of the first lens L1 is convex near the optical axis, and both are aspherical surfaces.

The second lens L2 has a positive focal power and is made of a glass material. An object-side surface S3 of the second lens L2 is convex near the optical axis, an image-side surface S4 of the second lens L2 is convex near the optical axis, and both are spherical surfaces.

The third lens L3 has a negative focal power and is made of a resin material. An object-side surface S5 of the third lens L3 is concave near the optical axis, an image-side surface S6 of the third lens L3 is concave near the optical axis, and both are aspherical surfaces.

The fourth lens L4 has a negative focal power and is made of a resin material. An object-side surface S7 of the fourth lens L4 is convex near the optical axis, an image-side surface S8 of the fourth lens L4 is concave near the optical axis, and both are aspherical surfaces.

The fifth lens L5 has a negative focal power and is made of a resin material. An object-side surface S9 of the fifth lens L5 is concave near the optical axis, an image-side surface S10 of the fifth lens L5 is convex near the optical axis, and both are aspherical surfaces.

The sixth lens L6 has a positive focal power degree and is made of a resin material. An object-side surface S11 of the sixth lens L6 is convex near the optical axis, an image-side surface S12 of the sixth lens L6 is concave near the optical axis, and both are aspherical surfaces.

A distance that is on the optical axis and that is between the object-side surface S1 of the first lens L1 and an imaging surface S15 corresponding to an infinite object distance is TTL, an effective focal length of the optical lens unit is f, and the two parameters can meet the following condition: $TTL/f \leq 0.88$, to implement a shorter TTL.

In Embodiment 4, a dispersion coefficient (Abbe number) of the second lens L2 is V2, and V2 meets $15 \leq V2 \leq 100$. A color aberration of the lens unit can be corrected through appropriate focal power allocation and dispersion coefficient selection.

In Embodiment 4, a changed amount of the focal length f is $\Delta f$ when a temperature changes by $\Delta°C$, and $\Delta f/\Delta°C$ is defined as a temperature drift coefficient of the lens unit. The temperature drift coefficient meets the following condition: $-1 \, \mu m/°C \leq \Delta f/\Delta°C \leq 1 \, \mu m/°C$, so that a temperature drift effect of a photographing system can be improved.

A relative refractive index temperature drift coefficient $\beta$ is defined as (dn/dt)rel, which represents a coefficient by which a refractive index changes in a medium, such as air, with a temperature of a material. A relative refractive index temperature drift coefficient $\beta2$ of the second lens L2 in Embodiment 4 meets: $-9 \times 10^{-5} \leq \beta2 \leq 9 \times 10^{-5}$. A focal length of the second lens L2 is f2, the effective focal length of the optical lens unit is f, and f2/f=0.79 meets a condition of $0 \leq f2/f \leq 3$. Therefore, a material with a low refractive index temperature drift coefficient and appropriate focal power allocation are used to obtain a relatively small system temperature drift coefficient.

In Embodiment 4, a spacing between the fourth lens L4 and the fifth lens L5 is SP4, a spacing between an object-side vertex position of the first lens L1 and an image-side vertex position of the sixth lens L6 is LT, and $SP4/LT \leq 0.2$, which helps reduce implementation difficulty of assembly of the lens.

In another implementation, optionally, a vignetting stop ST1 (not shown in the figure) may be disposed in front (namely, an object side) of the first lens L1 and a vignetting stop ST2 (not shown in the figure) may be disposed in rear (namely, an image side) of the sixth lens L6, so that a diameter of the lens unit can be effectively decreased.

In Embodiment 4, the effective focal length of the optical lens unit is f. A curvature radius of the object-side surface S3 of the second lens L2 is R21, a curvature radius of the image-side surface S4 of the second lens L2 is R22, and the two parameters meet the following condition: $|f/R21|+|f/R22|=1.77$. This helps correct a comprehensive aberration of the lens unit, so that a lateral color aberration of the optical lens unit is less than 1.5 um, an axial color aberration is less than 10 um, and distortion is less than 1%.

Table 4a is a table of characteristics of an optical system of this embodiment, and a curvature radius and a thickness each are in unit of millimeter (mm).

**Table 4a**

| Surface number | Description | Surface type | Curvature radius | Thickness | Material | Refractive index | Dispersion coefficient |
|---|---|---|---|---|---|---|---|
| OBJ | | Flat surface | Unlimited | Unlimited | | | |
| STO | Aperture stop | Flat surface | Unlimited | -0.650 | | | |
| S1 | First lens | Aspherical surface | 4.308 | 1.014 | PLASTIC | 1.5445 | 55.987 |
| S2 | | Aspherical surface | -20.959 | 0.100 | | | |
| S3 | Second lens | Standard surface | 9.912 | 0.694 | GLASS | 1.7174 | 29.51 |
| S4 | | Standard surface | -46.885 | 0.155 | | | |
| S5 | Third lens | Aspherical surface | -11.138 | 0.500 | PLASTIC | 1.651 | 21.518 |

(continued)

| Surface number | Description | Surface type | Curvature radius | Thickness | Material | Refractive index | Dispersion coefficient |
|---|---|---|---|---|---|---|---|
| S6 | | Aspherical surface | 6.522 | 0.100 | | | |
| S7 | Fourth lens | Aspherical surface | 3.431 | 0.499 | PLASTIC | 1.5445 | 55.987 |
| S8 | | Aspherical surface | 2.336 | 2.597 | | | |
| S9 | Fifth lens | Aspherical surface | -3.943 | 0.500 | PLASTIC | 1.5445 | 55.987 |
| S10 | | Aspherical surface | -4.893 | 0.100 | | | |
| S11 | Sixth lens | Aspherical surface | 5.007 | 0.500 | PLASTIC | 1.651 | 21.518 |
| S12 | | Aspherical surface | 5.321 | 0.500 | | | |
| S13 | Infrared cut-off filter | Flat surface | Unlimited | 0.210 | - | | |
| S14 | | Flat surface | Unlimited | 4.998 | | | |
| S15 | Image surface | Flat surface | Unlimited | | | | |

Table 4b shows high-order coefficients A4 and A6 that may be used for aspherical lens surfaces S1 to S12 in Embodiment 4.

**Table 4b**

| Surface number | K | A4 | A6 |
|---|---|---|---|
| S1 | -2.903E-010 | 3.310E-003 | 2.078E-004 |
| S2 | 3.111E-010 | 1.246E-002 | -7.549E-004 |
| S3 | 0 | 0 | 0 |
| S4 | 0 | 0 | 0 |
| S5 | 2.232E-010 | 9.145E-003 | -9.393E-004 |
| S6 | 1.031E-010 | 7.851E-003 | 3.842E-004 |
| S7 | 2.855E-010 | 7.300E-003 | -4.111E-003 |
| S8 | 9.308E-011 | -1.589E-002 | -7.441E-003 |
| S9 | 3.487E-010 | -6.939E-002 | -8.883E-004 |
| S10 | 3.585E-010 | -4.305E-002 | 4.135E-003 |
| S11 | -1.441E-010 | 1.089E-002 | -2.379E-003 |
| S12 | 2.463E-010 | 5.305E-003 | -1.834E-003 |

Table 4c shows the distance TTL that is on the optical axis and that is between the object-side surface S1 of the first lens L1 of the optical system of this embodiment and the imaging surface S15 corresponding to the infinite object distance, the maximum image height ImgH of the optical lens unit, the effective focal length f of the optical lens unit, the focal length f1 of the first lens, the focal length f2 of the second lens, the focal length f3 of the third lens, the focal length f4 of the fourth lens, the focal length f5 of the fifth lens, and the focal length f6 of the sixth lens.

**Table 4c**

| Parameter | TTL | ImgH | F | f1 | f2 | f3 | f4 | f5 | f6 |
|---|---|---|---|---|---|---|---|---|---|
| Value (mm) | 12.67 | 2.8 | 14.47 | 6.63 | 11.40 | -6.20 | -15.96 | -45.67 | 79.20 |

FIG. 5b shows an axial spherical aberration curve of the optical system of Embodiment 4. A horizontal axis is a focusing position on the optical axis, and a vertical axis is a field of view. The axial spherical aberration curve represents axial focusing positions that are of five pieces of light of different wavelengths and that are in different fields of view.

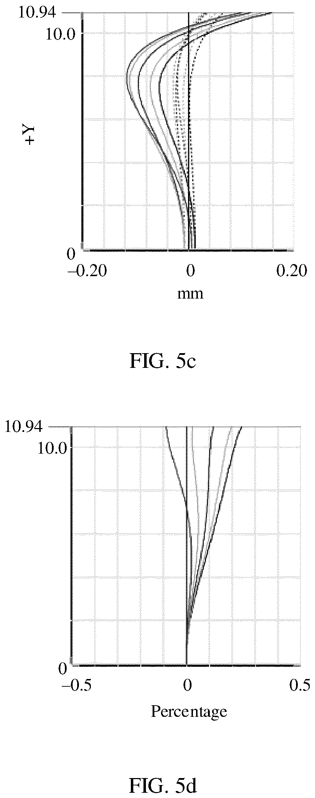

FIG. 5c shows an astigmatism curve of the optical system of Embodiment 4, and the astigmatism curve represents a tangential image surface curvature and a sagittal image surface curvature. A solid line with a larger curvature represents the tangential image surface curvature, and a dashed line with a smaller curvature represents the sagittal image surface curvature.

FIG. 5d shows a distortion curve of the optical system of Embodiment 4, and the distortion curve represents distortion values corresponding to different fields of view.

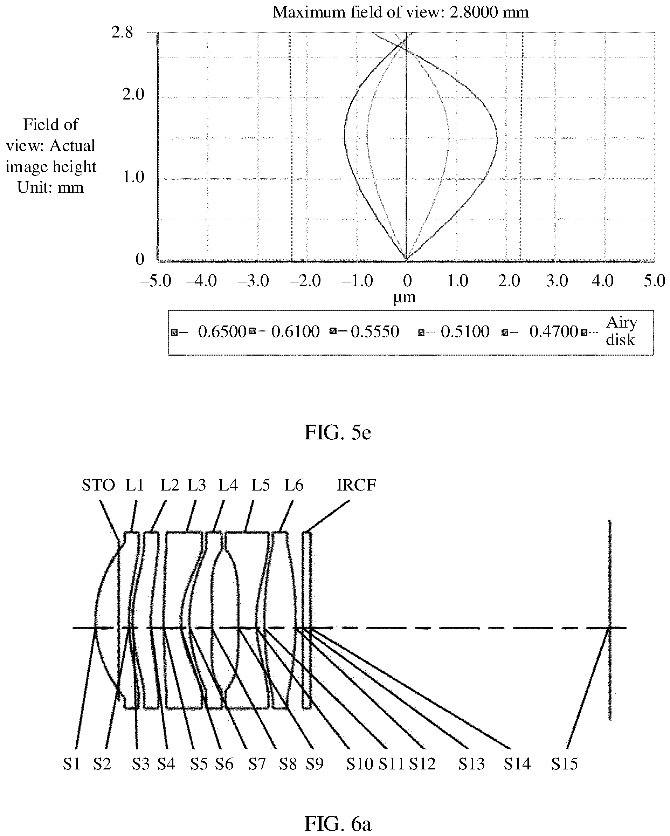

FIG. 5e shows a lateral color aberration curve of the optical system of Embodiment 4. A horizontal axis is an image height change, and a vertical axis is a field of view. The lateral color aberration curve represents lateral color aberrations that correspond to five pieces of light of different wavelengths and that are in different fields of view.

As can be learned from FIG. 5b to FIG. 5e, the optical system provided in Embodiment 4 can achieve good imaging quality.

**Embodiment 5**

As shown in FIG. 6a, in an optical lens unit of this implementation, an aperture stop STO, a first lens L1, a second lens L2, a third lens L3, a fourth lens L4, a fifth lens L5, and a sixth lens L6 are sequentially arranged on an optical axis from an object side to an image side. An infrared filter element IRCF and an electronic photosensitive element may be placed on an image surface S15, and the aperture stop is placed in front of the first lens L1.

The first lens L1 has a positive focal power and is made of a resin material. An object-side surface S1 of the first lens L1 is convex near the optical axis, an image-side surface S2 of the first lens L1 is concave near the optical axis, and both are aspherical surfaces.

The second lens L2 has a positive focal power and is made of a resin material. An object-side surface S3 of the second lens L2 is convex near the optical axis, an image-side surface S4 of the second lens L2 is concave near the optical axis, and both are aspherical surfaces.

The third lens L3 has a negative focal power and is made of a resin material. An object-side surface S5 of the third lens L3 is convex near the optical axis, an image-side surface S6 of the third lens L3 is concave near the optical axis, and both are aspherical surfaces.

The fourth lens L4 has a positive focal power and is made of a resin material. An object-side surface S7 of the fourth lens L4 is convex near the optical axis, an image-side surface S8 of the fourth lens L4 is concave near the optical axis, and both are aspherical surfaces.

The fifth lens L5 has a negative focal power and is made of a resin material. An object-side surface S9 of the fifth lens L5 is concave near the optical axis, an image-side surface S10 of the fifth lens L5 is concave near the optical axis, and both are aspherical surfaces.

The sixth lens L6 has a positive focal power and is made of a glass material. An object-side surface S11 of the sixth lens L6 is convex near the optical axis, an image-side surface S12 of the sixth lens L6 is convex near the optical axis, and both are spherical surfaces.

A distance that is on the optical axis and that is between the object-side surface S1 of the first lens L1 and an imaging surface S15 corresponding to an infinite object distance is TTL, an effective focal length of the optical lens unit is f, and the two parameters can meet the following condition: TTL/f≤1, to implement a shorter TTL.

In Embodiment 5, a dispersion coefficient (Abbe number) of the sixth lens L6 is V6, and V6 meets 15≤V6≤100. A color aberration of the lens unit can be corrected through appropriate focal power allocation and dispersion coefficient selection.

In Embodiment 5, a changed amount of the focal length f is $\Delta f$ when a temperature changes by $\Delta°C$, and $\Delta f/\Delta°C$ is defined as a temperature drift coefficient of the lens unit. The temperature drift coefficient meets the following condition: -1 $\mu$m/°C≤$\Delta f/\Delta°C$≤1 $\mu$m/°C, so that a temperature drift effect of a photographing system can be improved.

A relative refractive index temperature drift coefficient $\beta$ is defined as (dn/dt)rel, which represents a coefficient by which a refractive index changes in a medium, such as air, with a temperature of a material. A relative refractive index temperature drift coefficient $\beta6$ of the sixth lens L6 in Embodiment 5 meets: -9$\times10^{-5}$≤$\beta6$≤9$\times10^{-5}$, a focal length of the sixth lens L6 is f6, the effective focal length of the optical lens unit is f, and f6/f=0.49 meets a condition of 0≤f6/f≤3. Therefore, a material with a low refractive index temperature drift coefficient and focal power allocation can be used to obtain a relatively small system temperature drift coefficient.

In Embodiment 5, a spacing between the third lens L3 and the fourth lens L4 is SP3, a spacing between an object-side vertex position of the first lens L1 and an image-side vertex position of the sixth lens L6 is LT, and SP3/LT≤0.2, which helps reduce implementation difficulty of assembly of the lens.

In another implementation, optionally, a vignetting stop ST1 (not shown in the figure) may be disposed in front (namely, an object side) of the first lens L1 and a vignetting stop ST2 (not shown in the figure) may be disposed in rear (namely, an image side) of the sixth lens L6, so that a diameter of the lens unit can be effectively decreased.

In Embodiment 5, the effective focal length of the optical lens unit is f. A curvature radius of the object-side surface of the second lens L2 is R21, a curvature radius of the image-side surface of the second lens L2 is R22, and the two parameters meet the following condition: |f/R21|+|f/R22|=6.44. This helps correct a comprehensive aberration of the lens unit, so that a lateral color aberration of the optical lens unit is less than 1.5 um, an axial color aberration is less than 10 um, and distortion is less than 1%.

With reference to the foregoing specific embodiments, in the optical lens unit provided in this application, a focal power, a material, and a surface shape (concave or convex) of each lens are limited, and ranges of a dispersion coefficient, a temperature drift coefficient, a relative refractive index temperature drift coefficient, and a curvature radius of each surface that are of the lens, and a spacing between adjacent lenses are further limited, so that not only a temperature drift effect problem is resolved, but also an imaging effect is improved. This helps correct a comprehensive aberration of the optical lens unit, so that a lateral color aberration of the optical lens unit provided in this application is less than 1.5 um, an axial color aberration is less than 10 um, and distortion is less than 1%.

Table 5a is a table of characteristics of an optical system of this embodiment, and a curvature radius and a thickness each are in unit of millimeter (mm).

**Table 5a**

| Surface number | Description | Surface type | Curvature radius | Thickness | Material | Refractive index | Dispersion coefficient |
|---|---|---|---|---|---|---|---|
| OBJ | | Flat surface | Unlimited | Unlimited | | | |
| STO | Aperture stop | Flat surface | Unlimited | -0.650 | | | |
| S1 | First lens | Aspherical surface | 3.179 | 0.945 | PLASTIC | 1.5445 | 55.987 |
| S2 | | Aspherical surface | 5.166 | 0.100 | | | |
| S3 | Second lens | Aspherical surface | 4.065 | 0.518 | PLASTIC | 1.651 | 21.518 |
| S4 | | Aspherical surface | 5.042 | 0.359 | | | |
| S5 | Third lens | Aspherical surface | 12.004 | 0.499 | PLASTIC | 1.651 | 21.518 |
| S6 | | Aspherical surface | 2.410 | 0.233 | | | |
| S7 | Fourth lens | Aspherical surface | 3.675 | 0.644 | PLASTIC | 1.5445 | 55.987 |
| S8 | | Aspherical surface | -14.763 | 0.737 | | | |
| S9 | Fifth lens | Aspherical surface | -23.496 | 0.498 | PLASTIC | 1.5445 | 55.987 |
| S10 | | Aspherical surface | 3.839 | 0.235 | | | |

(continued)

| Surface number | Description | Surface type | Curvature radius | Thickness | Material | Refractive index | Dispersion coefficient |
|---|---|---|---|---|---|---|---|
| S11 | Sixth lens | Standard surface | 10.000 | 0.889 | GLASS | 1.7174 | 29.51 |
| S12 | | Standard surface | -10.000 | 0.200 | | | |
| S13 | Infrared cut-off filter | Flat surface | Unlimited | 0.210 | - | | |
| S14 | | Flat surface | Unlimited | 8.465 | | | |
| S15 | Image surface | Flat surface | Unlimited | | | | |

Table 5b shows high-order coefficients A4 and A6 that may be used for aspherical lens surfaces S1 to S12 in Embodiment 5.

**Table 5b**

| Surface number | K | A4 | A6 |
|---|---|---|---|
| S1 | 3.032E-010 | -2.886E-003 | 9.721E-006 |
| S2 | -1.141E-010 | -7.708E-003 | -2.728E-004 |
| S3 | -1.652E-010 | -1.133E-002 | -4.723E-004 |
| S4 | 1.847E-010 | -2.194E-002 | 2.239E-003 |
| S5 | -3.765E-010 | -1.568E-002 | 2.553E-003 |
| S6 | -1.854E-010 | -1.842E-002 | -2.766E-003 |
| S7 | -2.322E-010 | -1.101E-002 | 9.397E-004 |
| S8 | 2.401E-010 | 1.963E-002 | 1.541E-003 |
| S9 | 8.690E-003 | -5.134E-003 | -3.558E-003 |
| S10 | 2.619E-002 | -2.782E-002 | 1.726E-003 |
| S11 | 0 | 0 | 0 |
| S12 | 0 | 0 | 0 |

Table 5c shows the distance TTL that is on the optical axis and that is between the object-side surface S1 of the first lens L1 of the optical system of this embodiment and the imaging surface S15 corresponding to the infinite object distance, the maximum image height ImgH of the optical lens unit, the effective focal length f of the optical lens unit, the focal length f1 of the first lens, the focal length f2 of the second lens, the focal length f3 of the third lens, the focal length f4 of the fourth lens, the focal length f5 of the fifth lens, and the focal length f6 of the sixth lens.

**Table 5c**

| Parameter | TTL | ImgH | F | f1 | f2 | f3 | f4 | f5 | f6 |
|---|---|---|---|---|---|---|---|---|---|
| Value (mm) | 14.5 | 2.8 | 14.5 | 12.95 | 26.40 | -4.69 | 5.45 | -5.42 | 7.06 |

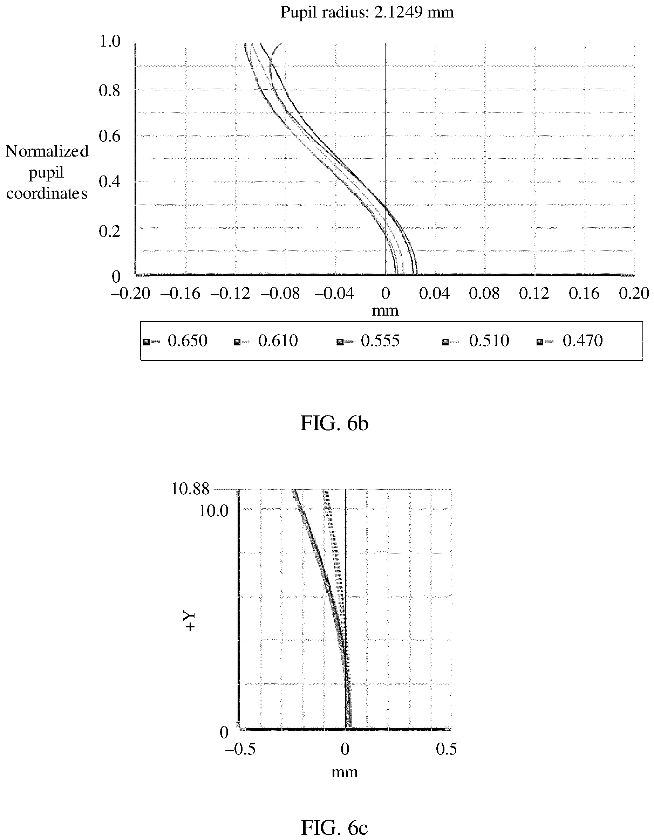

FIG. 6b shows an axial spherical aberration curve of the optical system of Embodiment 5. A horizontal axis is a focusing position on the optical axis, and a vertical axis is a field of view. The axial spherical aberration curve represents axial focusing positions that are of five pieces of light of different wavelengths and that are in different fields of view.
FIG. 6c shows an astigmatism curve of the optical system of Embodiment 5, and the astigmatism curve represents a tangential image surface curvature and a sagittal image surface curvature. A solid line with a larger curvature represents the tangential image surface curvature, and a dashed line with a smaller curvature represents the sagittal image surface curvature.

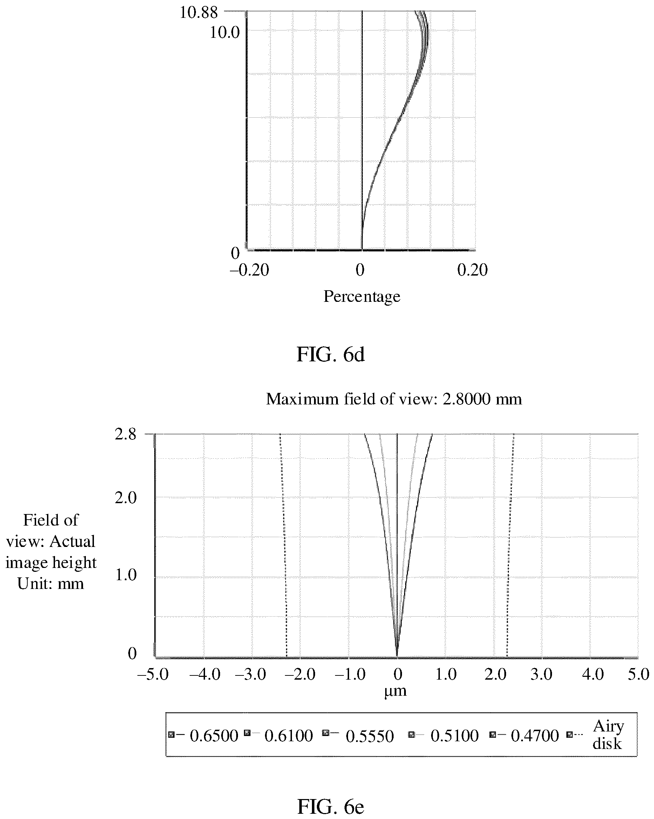

FIG. 6d shows a distortion curve of the optical system of Embodiment 5, and the distortion curve represents distortion values corresponding to different fields of view.

FIG. 6e shows a lateral color aberration curve of the optical system of Embodiment 5. A horizontal axis is an image height change, and a vertical axis is a field of view. The lateral color aberration curve represents lateral color aberrations that correspond to five pieces of light of different wavelengths and that are in different fields of view.

As can be learned from FIG. 6b to FIG. 6e, the optical system provided in Embodiment 5 can achieve good imaging quality.

With reference to the foregoing specific embodiments, in the optical lens unit provided in this application, a focal power, a material, and a surface shape (concave or convex) of each lens are limited, and ranges of a dispersion coefficient, a temperature drift coefficient, a relative refractive index temperature drift coefficient, and a curvature radius of each surface that are of the lens, and a spacing between adjacent lenses are further limited, so that not only a temperature drift effect problem is resolved, but also an imaging effect is improved. This helps correct a comprehensive aberration of the optical lens unit, so that a lateral color aberration of the optical lens unit provided in this application is less than 1.5 um, an axial color aberration is less than 10 um, and distortion is less than 1%.

In this application, a material of at least one lens in the optical lens unit is selected as the first material whose relative refractive index temperature drift coefficient is less than the relative refractive index temperature drift coefficient of the plastic material, so that an optical effect of the optical lens unit can be suppressed. In this way, parameters such as a focal length and an MTF (Modulation Transfer Function (modulation transfer function)) of the optical lens unit are insensitive to a temperature. This helps reduce a travel allowance used by a voice coil motor to compensate for the temperature drift effect of the lens unit or cancel a temperature drift effect compensation algorithm of a photographing system, thereby improving user experience, and obtaining excellent optical quality.

## Claims

1. An optical lens unit, comprising a plurality of lenses sequentially arranged in an optical axis direction from an object side to an image side, wherein a material of at least one of the plurality of lenses is a first material, a relative refractive index temperature drift coefficient of the first material is less than a relative refractive index temperature drift coefficient of a plastic material; among the plurality of lenses, the first three lenses in the direction from the object side to the image side are sequentially a first lens, a second lens, and a third lens; the first lens has a positive focal power, the second lens has a positive focal power, and the third lens has a negative focal power; an effective focal length of the optical lens unit is f; and a distance that is on an optical axis and that is between an object-side surface of the first lens and an imaging surface is TTL, wherein $TTL/f \leq 1$.

2. The optical lens unit according to claim 1, wherein the relative refractive index temperature drift coefficient of the first material is $\beta$, and $-9 \times 10^{-5} \leq P \leq 9 \times 10^{-5}$.

3. The optical lens unit according to claim 2, wherein the relative refractive index temperature drift coefficient of the first material is $\beta$, and $-9 \times 10^{-5} \leq \beta \leq 0$.

4. The optical lens unit according to claim 3, wherein the first material is a glass material

5. The optical lens unit according to claim 2, wherein a temperature drift coefficient of the optical lens unit is $\Delta f/\Delta °C$, and $-2.6\ um/°C \leq \Delta f/\Delta °C \leq 2.6\ um/°C$.

6. The optical lens unit according to claim 5, wherein $-1\ um/°C \leq \Delta f/\Delta °C \leq 1\ um/°C$.

7. The optical lens unit according to claim 1, wherein a curvature radius of an object-side surface of the second lens is R21, a curvature radius of an image-side surface of the second lens is R22, and $|f/R21|+|f/R22|<8$.

8. The optical lens unit according to claim 1, wherein there are six lenses, which are respectively the first lens, the second lens, the third lens, a fourth lens, a fifth lens, and a sixth lens that are sequentially arranged in the direction from the object side to the image side, the optical lens unit further comprises a vignetting stop, and the vignetting stop is disposed on an object side of the first lens and/or disposed on an image side of the sixth lens.

9. The optical lens unit according to claim 1, wherein a dispersion coefficient of the lens whose material is the first material is V, and $15 \leq V \leq 100$.

10. The optical lens unit according to claim 1, wherein a material of the first lens is the first material, and at least one surface of the first lens is a spherical surface.

11. The optical lens unit according to claim 10, wherein a spherical radius of the spherical surface of the first lens is R, and -100 mm<R<100 mm

12. The optical lens unit according to claim 10, wherein a focal length of the first lens is f1, and $0 \leq f1/f \leq 3$.

13. The optical lens unit according to claim 10, wherein a spacing between the second lens and the third lens is SP2, a spacing between an object-side vertex position of the first lens and an image-side vertex position of the sixth lens is LT, and $SP2/LT \leq 0.2$.

14. The optical lens unit according to claim 1, wherein a material of the second lens is the first material, and at least one surface of the second lens is a spherical surface.

15. The optical lens unit according to claim 14, wherein a spherical radius of the spherical surface of the second lens is R, and -100 mm<R<100 mm

16. The optical lens unit according to claim 14, wherein a focal length of the second lens is f2, and $0 \leq f2/f \leq 3$.

17. The optical lens unit according to claim 14, wherein there are six lenses, which are respectively the first lens, the second lens, the third lens, a fourth lens, a fifth lens, and a sixth lens that are sequentially arranged in the direction from the object side to the image side, a spacing between the fourth lens and the fifth lens is SP4, a spacing between an object-side vertex position of the first lens and an image-side vertex position of the sixth lens is LT, and $SP4/LT \leq 0.2$.

18. The optical lens unit according to claim 1, wherein there are six lenses, which are respectively the first lens, the second lens, the third lens, a fourth lens, a fifth lens, and a sixth lens that are sequentially arranged in the direction from the object side to the image side, a material of the sixth lens is the first material, and at least one surface of the sixth lens is a spherical surface.

19. The optical lens unit according to claim 18, wherein a focal length of the sixth lens is f6, and $0 \leq f6/f \leq 3$.

20. The optical lens unit according to claim 18, wherein a spacing between the third lens and the fourth lens is SP3, a spacing between an object-side vertex position of the first lens and an image-side vertex position of the sixth lens is LT, and $SP3/LT \leq 0.2$.

21. The optical lens unit according to claim 1, wherein the object-side surface of the first lens is convex near the optical axis.

22. A camera, comprising a lens barrel and the optical lens unit according to any one of claims 1 to 21, wherein the optical lens unit is installed in the lens barrel.

23. A terminal device, comprising the camera according to claim 22.

FIG. 1

FIG. 2a

Pupil radius: 2.1248 mm

Normalized pupil coordinates

mm

■— 0.650　　■— 0.610　　■— 0.555　　■— 0.510　　■— 0.470

FIG. 2b

mm

FIG. 2c

FIG. 2d

FIG. 2e

FIG. 3a

Pupil radius: 2.1316 mm

FIG. 3b

EP 3 961 282 A1

FIG. 3c

FIG. 3d

26

Maximum field of view: 2.8000 mm

FIG. 3e

FIG. 4a

Pupil radius: 2.1249 mm

Normalized pupil coordinates

mm

| ■— 0.650 | ■— 0.610 | ■— 0.555 | ■— 0.510 | ■— 0.470 |

FIG. 4b

+Y

mm

FIG. 4c

FIG. 4d

Maximum field of view: 2.8000 mm

Field of view: Actual image height Unit: mm

FIG. 4e

STO  L1   L2   L3   L4   L5   L6   IRCF

S1  S2   S3 S4   S5 S6   S7  S8 S9   S10 S11 S12   S13   S14   S15

FIG. 5a

Pupil radius: 2.1249 mm

Normalized pupil coordinates

1.0
0.8
0.6
0.4
0.2
0

−0.020 −0.016 −0.012 −8.0e-3 −4.0e-3  0   4.0e-3  8.0e-3  0.012  0.016  0.020
mm

—— 0.650    —— 0.610    —— 0.555    —— 0.510    —— 0.470

FIG. 5b

FIG. 5c

FIG. 5d

Maximum field of view: 2.8000 mm

Field of
view: Actual
image height
Unit: mm

| ⊡— 0.6500 | ⊡⸱⸱ 0.6100 | ⊡—0.5550 | ⊡— 0.5100 | ⊡— 0.4700 | ⊡⸱⸱ Airy disk |

FIG. 5e

STO L1 L2 L3 L4 L5 L6 IRCF

S1 S2 S3 S4 S5 S6 S7 S8 S9 S10 S11 S12 S13 S14 S15

FIG. 6a

Pupil radius: 2.1249 mm

FIG. 6b

FIG. 6c

FIG. 6d

Maximum field of view: 2.8000 mm

Field of view: Actual image height Unit: mm

—■— 0.6500  ■— 0.6100  ■— 0.5550  ■— 0.5100  ■— 0.4700  ■··· Airy disk

FIG. 6e

## INTERNATIONAL SEARCH REPORT

| International application No. |
| --- |
| **PCT/CN2020/098602** |

**A. CLASSIFICATION OF SUBJECT MATTER**

G02B 13/00(2006.01)i

According to International Patent Classification (IPC) or to both national classification and IPC

**B. FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

VEN; CNABS; CNTXT; CNKI; USTXT: 第六, 第6, 透镜, 折射率, 温漂, 温度, 漂移, 系数, TL, TTL, f, 光学总长, 焦距, 焦长, 玻璃, sixth,6th, lens+, refract+, index, temperature+, drift+, coefficient, focal, length, focus, glass

**C. DOCUMENTS CONSIDERED TO BE RELEVANT**

| Category* | Citation of document, with indication, where appropriate, of the relevant passages | Relevant to claim No. |
| --- | --- | --- |
| X | CN 109709659 A (LARGAN PRECISION CO., LTD.) 03 May 2019 (2019-05-03) description, paragraphs [0133]-[0273] and [0316]-[0447], and figures 1-31 | 1-23 |
| X | CN 104730682 A (SAMSUNG ELECTRO-MECHANICS CO., LTD.) 24 June 2015 (2015-06-24) description, paragraphs [0004]-[0167], and figures 1-20 | 1-23 |
| PX | CN 110456487 A (ZHEJIANG SUNNY OPTICS CO., LTD.) 15 November 2019 (2019-11-15) description, paragraphs [0004]-[0126], and figures 1-14C | 1-7, 9-15, 21-23 |
| A | CN 109425959 A (NINGBO SUNNY AUTOMOTIVE OPTICAL TECHNOLOGY CO., LTD.) 05 March 2019 (2019-03-05) entire document | 1-23 |
| A | CN 108459399 A (JIAXING ZHONGRUN OPTICAL SCIENCE AND TECHNOLOGY CO., LTD.) 28 August 2018 (2018-08-28) entire document | 1-23 |
| A | US 2016161713 A1 (LARGAN PRECISION CO., LTD.) 09 June 2016 (2016-06-09) entire document | 1-23 |

☐ Further documents are listed in the continuation of Box C.      ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 September 2020** | **10 October 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/098602**

| Patent document cited in search report | | | Publication date (day/month/year) | Patent family member(s) | | | Publication date (day/month/year) |
|---|---|---|---|---|---|---|---|
| CN | 109709659 | A | 03 May 2019 | US | 2019121081 | A1 | 25 April 2019 |
| | | | | TW | 201917436 | A | 01 May 2019 |
| | | | | TW | I629531 | B | 11 July 2018 |
| | | | | IN | 201824015573 | A | 26 April 2019 |
| CN | 104730682 | A | 24 June 2015 | CN | 104730682 | B | 25 May 2018 |
| | | | | CN | 108333722 | A | 27 July 2018 |
| | | | | KR | 20150072154 | A | 29 June 2015 |
| | | | | US | 2015177483 | A1 | 25 June 2015 |
| | | | | KR | 101652849 | B1 | 31 August 2016 |
| | | | | US | 9201212 | B2 | 01 December 2015 |
| | | | | CN | 108333722 | B | 11 August 2020 |
| CN | 110456487 | A | 15 November 2019 | CN | 211086753 | U | 24 July 2020 |
| CN | 109425959 | A | 05 March 2019 | | None | | |
| CN | 108459399 | A | 28 August 2018 | CN | 208367318 | U | 11 January 2019 |
| US | 2016161713 | A1 | 09 June 2016 | TW | I519809 | B | 01 February 2016 |
| | | | | TW | 201621379 | A | 16 June 2016 |
| | | | | US | 9557532 | B2 | 31 January 2017 |
| | | | | IN | 201501233 | I2 | 05 August 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910572891

- CN 201910930246